Europäisches Patentamt

European Patent Office

Office européen des brevets

(11) Publication number: **0 020 380**
**B1**

(12) **EUROPEAN PATENT SPECIFICATION**

(45) Date of publication of patent specification: **31.10.84**

(51) Int. Cl.³: **A 24 C 5/58, E 05 D 17/00**

(21) Application number: **79901020.2**

(22) Date of filing: **23.07.79**

(86) International application number:
**PCT/US79/00530**

(87) International publication number:
**WO 80/00526 03.04.80 Gazette 80/07**

(54) **Method of preparing the cutting surface of a drum in a cigarette tipping machine and a machine with such a drum.**

(30) Priority: **11.09.78 US 941497**

(43) Date of publication of application:
**07.01.81 Bulletin 81/01**

(45) Publication of the grant of the patent:
**31.10.84 Bulletin 84/44**

(84) Designated Contracting States:
**CH DE GB NL**

(56) References cited:
**US-A-2 271 637**
**US-A-2 963 026**
**US-A-3 043 056**
**US-A-3 474 576**
**US-A-3 933 159**

(73) Proprietor: **PHILIP MORRIS INCORPORATED**
**120 Park Avenue**
**New York, New York 10017 (US)**

(72) Inventor: **GILLESPIE, Andrew Joseph**
**4915 Evelyn Byrd Road**
**Richmond, VA 23225 (US)**

(74) Representative: **Bass, John Henton et al**
**REDDIE & GROSE 16 Theobalds Road**
**London WC1X 8PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to cutting mechanisms for cigarette tipping paper on cigarette tipping machines as one of the process steps in manufacturing cigarettes.

Some cigarette tipping machine assemblies include an apparatus for cutting tipping paper prior to gluing and wrapping the cut segments onto a cigarette at the mouthpiece end. The cutting apparatus has included a "cork" drum against which sheet cork or cork-like paper is squeezed by a knife blade and the drum surface to part the tipping paper. The "cork" may be true cork or may be made of paper stock. Such paper stock is patterned and colored to simulate cork sheeting in appearance. In the trade, the tipping paper is referred to as cork whether of cork or paper origin. The drum against which it is cut is called the cork drum. The cooperating knife is called the cork knife.

The number of cigarettes that can be run on a cigarette manufacturing line per unit of time has grown as the speed of operation capability of cigarrette making machinery has increased. The top machine speeds have been limited by top speeds of individual operations. The glue setting rate in the cork tip gluing and cutting operation has been a speed-limiting factor. At relatively low speeds tipping glue is applied at room temperature and set at room temperature. One manufacturer provides a cigarette making machine having a heated cork drum to speed up the setting of the glue. This has raised the speed limit at which such a machine can be run. Such a machine is described in US—A—3 933 159.

Prior to the innovation of heating the cork drum, drum surfaces and knives have had a useful life stretching over several days to a month or more. The innovation of heating the cork drum to speed the setting action of the glue and consequent rise in the upper limit of speeds at which the cigarettes may be tipped have dramatically reduced the life of cork drum surfaces and knives at such speeds because the drum surfaces become deformed when heated.

It has been observed that when a cigarette tipper with a heated cork drum that has cutting surface inserts machined at ambient temperature is speeded up, difficulties connected with making a clean separation of the tipping paper become aggravated out of proportion to the degree of increase of the speed of the maker. The increased temperature level causes uneven expansion of the diameter along the length of the cork drum and warps the surfaces of the cutting inserts. At very high speeds the lives of the cutting elements are shortened considerably due to the warped surface of the inserts to a point where it becomes impractical to suffer the down time needed to make frequent drum and knife replacements. Damage has been found to occur to knives and inserts in the span of hours rather than days as previously experienced. The heating of the cork drum for faster gluing thus has introduced an unexpected additional operating limitation based upon the warping of the cork drum inserts and subsequent damage to the drum inserts and cork knives.

Thus, while heating of the cork drum has aided in speeding up the total cigarette production rate per minute it has resulted in a shorter life for the elements of the cutting apparatus. The cork drum inserts and mating cutting knives wear unevenly and very rapidly, and in some cases replacements of several times per shift are required. Since it is highly desirable to take advantage of the advanced speeds of cigarette making made possible through heating the adhesive on the cork drum and to cut wider tipping paper for use on longer filter tips, it is necessary to develop a cutting arrangement that will be acceptably durable at the highest speeds made possible with the use of a heated cork drum and cut the wider papers now going into longer filter tipped cigarettes.

It has now been found, in accordance with this invention, that heating a cork drum assembly up to the operating temperature and then machining the cutting surface to a preselected configuration relative to the configuration of the knife, while hot, improves cutting effectiveness. This also allows cork drum inserts to last much longer between replacements and also lengthens knife life. The upper limits on speed at which the maker can be run are lifted by this method. It also allows for faster operations to become feasible economically because of the increase in life expectancy for drum and knives.

In the preferred practice of the invention the cork drum, which is provided with carbide inserts, is first preheated to operating temperature and the carbide inserts then ground while the drum is held at operating temperature. In this manner, the cutting surface, here provided by the drum inserts, maintains the desired configuration of surface when its operating temperature is within a desired preselected range. After cooling to room temperature, the drum insert surfaces may deform; but on reheating to operating temperature, the drum surfaces reach the trueness to which they had previously been ground. The cutting knives are then ground with edges slightly concave so that the ends slightly precede the centre in making contact with the cork tipping as it is squeezed between a mating knife and a surface of an insert of the cork drum.

In the drawings:

Figure 1 is a diagrammatic view of the placement of a cork drum assembly in a cigarette making machine.

Figure 2 is a view in perspective of the cork drum and cork knives.

Figure 3 is a cross section taken through line III—III of Figure 2.

Figure 4 is a partial cross section as in Figure 3 showing one form of aberration of the cork drum.

Figure 5 is similar to Figure 4 showing an alternative form of cork drum aberration.

Detailed Description of Invention

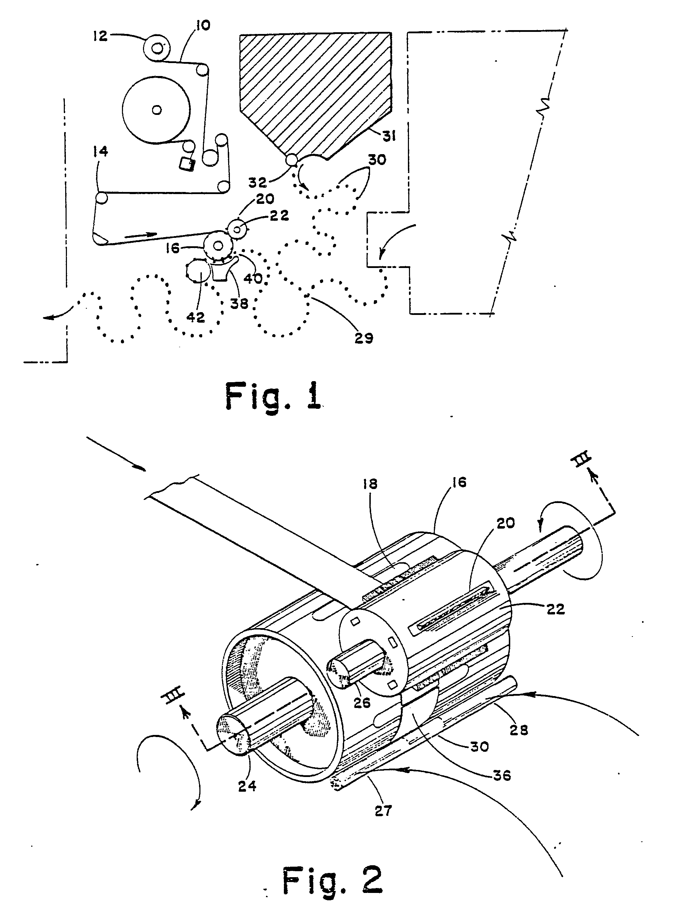

Referring to Figure 1, the general functions of a cigarette tipping machine in sequence begin with the feeding of the tipping paper 10 from a bobbin roll 12. Glue is applied to the tipping paper by any suitable gluing applicator device (not shown) but represented by roll 14. After gluing, the paper is fed into and around the cork drum 16 with the glued side facing outwardly.

The cork drum 16 is heated for the purpose of partially removing the solvent from solvent-type glue or activating the glue as may be required in the case of heat activated glues. While the tipping paper is passing about the cork drum, it is cut to a proper length suitable for wrapping around the butt ends of a pair of cigarettes. The tipping forms a mouthpiece and is also used to adhere a filter to the butt end of a cigarette.

The cutting function is carried out by press cutting the paper between the cork roll surface inserts 18 and cork cutting knives 20. The contact pressure at the line of meeting of a knife to a hardened cutting insert on the cork roll must be very precisely controlled. Too hard a bite by the knife blades 20 against the inserts 18 is destructive of the integrity of the edge of the cork cutting knives and insert surfaces. Carbide is used to make both the cutting inserts 18 and the cork knives 20. The knives 20 are mounted with the edges aligned along the axis of the knife drum 22 and protrude a distance from the knife drum 22 to meet and press against the cutting inserts 18. A positive drive mechanism (not shown) interconnects the drive shafts 24 of the cork drum 16 and drive shaft 26 of knife drum 22 with the drive mechanism of the cigarette tipping machine for synchronous operation therewith. As the cork drum 16 and knife drum 22 rotate, the knives 20 revolve into the respectively aligned hardened inserts 18 in the cork drum 16.

Tobacco rods 27 and 28 and filter plug 30 are conveyed by suitable means from separate sources to a metting point at 29 of Figure 1. Filter plugs are prepared on a plug maker (not shown) and are loaded into the hopper 31 for feeding sequentially individually out of the bottom of hopper 31 at 32. The individual filter plugs 30 follow a tortuous path over conveying rolls (not shown) to point 29 where each filter plug is deposited on the perimeter of a conventional fluted conveyor drum (not shown) interlying in end to end relationship a pair of cigarette rods, which extend outwardly from the filter plug as illustrated in Figure 2. The filter plug 30 at this point is of a length sufficient to provide two separate filter plugs when divided at the center. Each resulting filter plug (not shown) in separate form will then be of a prescribed length for a given cigarette design. Prior to cutting of the filter plug, the tipping paper 10 is subdivided into sections of equal lengths 36 adequate to ring the uncut filter plug and provide a slight added overlapping extension for joining and to provide reinforcement at the joined area. The tipping paper 10 thus cut to length intercepts its individual intended filter plug and cigarette rod assembly and attaches thereto at one end and travels along the rolling shoe 38. Rolling shoe 38 is adapted to press the tipping sections 36 against the cigarette rod and filter tip assembly and cooperates with the cork drum 16 to wrap the tipping 36 into place on the cigarette rod assembly by rolling action. The rolling action is carried out in a rolling passage 40 between the cork drum 16 and the rolling shoe 38. Suction means (not shown) associated with parts in the surface of cork drum 16 operate to hold the cut tipping sections in place with suction release timed to allow the wrapping to take place. A fluted take off drum 42 receives the glued assemblies and advances them individually to a rotating knife (not shown) to be cut into two sections each forming a cigarette having a filter mouthpiece formed at one end by tipping paper wrapped about a filter plug and joined to a portion of a cigarette rod.

The apparatus thus far described is similar to that shown in the single figure of U.S. Patent 2,963,026 where the tipping bobbin described as a reel of encircling band material is shown at 3. The cork drum described as a rolling drum is shown at 1, a rotating knife arrangement for severing the cigarette rod assembly is shown at 5, and the rolling shoe called therein a rolling surface is shown as 7 at position 6.

A description of a glue applicator device, which may be used in conjunction with the apparatus of the present invention and as represented by roll 14, is described in U.S. Patent 3,933,159.

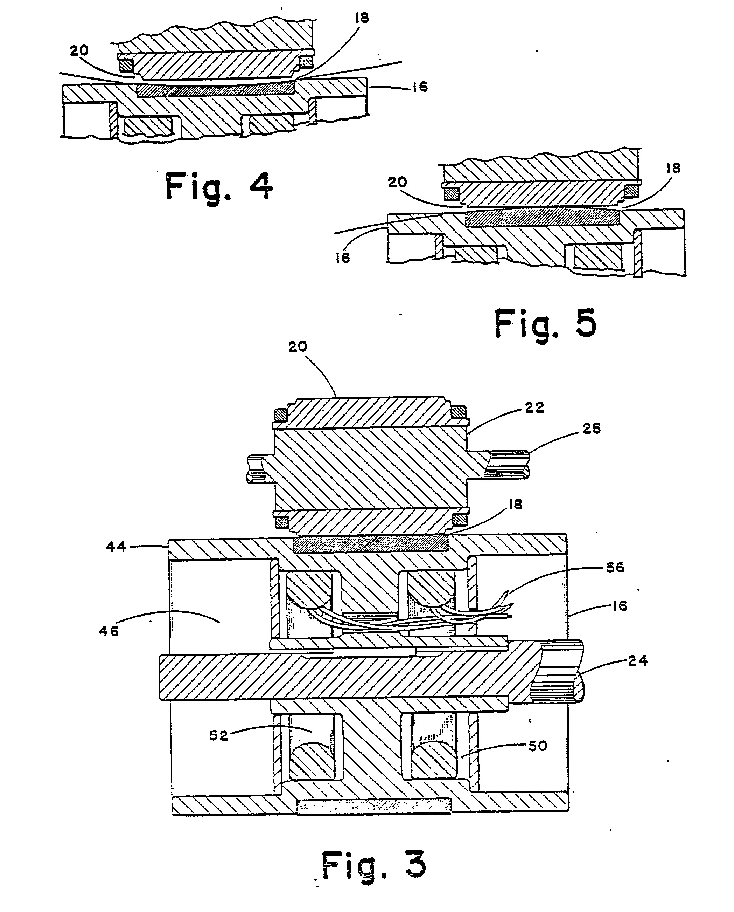

The heating of a conventionally cold ground cork drum causes aberrated cutting surfaces to occur thereon as has been described previously. The type of aberration, which occurs is exaggeratedly illustrated in Figure 4 of the drawings. The cork knife 20 is illustrated as being nearly straight while the cork drum cutting surface insert 18 is shown in exaggerated form as it would appear at operating temperature if it had been machined to a planar surface at room temperature. In Figure 5 is shown by way of illustration in exaggerated form, the shape that would be necessary to cold machine the cutting insert 18 at room temperature in order to have it become planar at operating temperatures.

The machining of the insert or knife surfaces may be done in any common manner and may include the use of grinding methods. A preferred method of grinding would be to carry out the entire series of grinding operations with the cork drum and cork knife drum held at the temperature at which they will be maintained during operation. Parts that have been ground according to the procedure described above will always present surfaces and edges of the desired planar accuracy and size in diameter at the predetermined operating temperature inasmuch as the surfacing has been accomplished under the same temperature conditions as prevails when the surface ground components are in operation.

The cork drum 16 as shown in Figure 3 comprises a cylindrical shell 44 having a central aperture 46. A cork drum shaft 24 is positioned within the central aperture 46 and is keyed for effecting a positive driving connection between the cork drum 16 and the shaft 24, which extends outwardly of both ends of the cork drum 16. Heater apertures 50 in the interior of cork drum 16 have suitably supported therein electrical resistance heaters 52, which are energized electrically through current supplied from a suitable source through wires 56. A thermostatically responsive temperature sensing switch (not shown) is positioned adjacent the cork drum 16 where it may sense drum temperature and respond to turn the current on and off in response to a preset predetermined desired operating temperature. No direct heat is applied to the cork knife drum 22 since the knives are ground at room temperature and cooled to ambient temperature by room air circulating about the cork knife drum during operation. No appreciable amount of heat is transmitted from the heated surfaces of the cork drum to the knives since the tipping paper insulates the knives for the greatest part of the cutting cycle.

The described mode of the present invention is suited to be utilized in the operation of at least one well known high speed cigarette tipping machine, that is the Molins Model PA-8 manufactured by Molins Limited of London, England. The last above machine may be supplied with a cork tipping gluing and cutting apparatus of the type described herein and is capable of attaining very high speeds of cigarette production. It was found that by applying the present method of the present invention in preparing cork drum surfaces that the capability for cutting wider tipping paper was improved and the life of the cutting blades and inserts were lengthened satisfactorily and down time was reduced to a minimum and general overall economic efficiency of cigarette production of the machine was improved.

## Claims

1. A method of preparing the cutting surface (18) of a drum (16) in a cigarette tipping machine which also comprises a knife (20) having an edge arranged to meet in cooperative relationship in use with said cutting surface to cut cork tipping paper, and including heating said cork drum to a desired operating temperature in use above ambient temperature, characterised by the step of heating said drum (16) to operating temperature and machining the cutting surface (18) of said drum to a preselected configuration relative to the configuration of the knife (20) while at said operating temperature.

2. The method of claim 1, including the step of machining the cutting surface (18) of said cork drum (16) straight on a line in the plane of the axis of said drum.

3. The method of claim 2 including the further step of machining an edge of said cork knife (20) straight.

4. The method of claim 2, including the step of machining a concave edge on said cork knife (20).

5. The method of claim 1, including the step of machining said surface (18) of said cork drum (16) concave and said edge of said cork knife (20) straight.

6. The method of claim 1, wherein the cork drum (16) and the cork knife (20) are machined to configurations such that cork tipping paper fed over said heated cork drum is cut by first contacting said paper at the outer edges with said cork cutting knife.

7. The method of claim 6, wherein said cutting surfaces (18) has the desired preselected configuration when its operating temperature is within a desired preselected range.

8. The method of claim 7 wherein said preselected range of operating temperatures is higher than ambient temperatures.

9. A cigarette tipping machine comprising a cork drum (16) means (52) for heating said cork drum to an operating temperature above ambient temperature, and a cutting surface (18) on said cork drum, characterised in that said cutting surface on said cork drum has been machined to a desired configuration relative to the configuration of a cutting knife having an edge arranged to meet in use in co-operative relationship with said cutting surface to cut cork tipping paper therebetween while the cork drum was heated to and held at said operating temperature.

10. The apparatus of claim 9, wherein a portion of said machined surface (18) of said cork drum (16) is made to define a straight line.

11. The apparatus of claim 9 or 10, wherein an edge on said cutting knife (20) is machined to a slightly concave configuration.

12. The apparatus of claim 9, 10 or 11, wherein said cutting surface (18) is constituted by hardened insert in said cork drum (16).

## Revendications

1. Procédé de préparation de la surface de coupe (18) d'un tambour (16) de machine pour embouts de cigarettes qui comprend également une lame (20) de coupe ayant une arête disposée de manière à coopérer, en service, avec la dite surface de coupe pour sectionner un papier-liège à embout, ce procédé comportant le chauffage du tambour à liège à une température de service requise, supérieure à la température ambiante, caractérisé par l'opération consistant à chauffer le tambour (16) à sa température de service et à usiner à la dite température, la surface de coupe (18) du tambour pour lui donner une allure prédéterminée en relation avec celle de la lame (20).

2. Procédé selon la revendication 1, comprenant l'étape consistant à usiner la surface de coupe (18) du tambour à liège (16) selon une ligne droite située dans un plan contenant l'axe du tambour.

3. Procédé selon la revendication 2, comprenant l'étape ultérieure consistant à usiner une arête de la lame à liège (20) selon une ligne droite.

4. Procédé selon la revendication 2, comportant l'étape consistant à usiner une arête concave sur la dite lame à liège (20).

5. Procédé selon la revendication 1, comportant l'étape consistant à usiner la dite surface (18) du tambour (16) à liège selon une forme concave et la dite arête de la lame (20) à liège selon une ligne droite.

6. Procédé selon la revendication 1, selon lequel le tambour à liège (16) et la lame à liège (20) sont usinées selon des allures telles que le papier-liège à embout conduit sur le tambour à liège chauffé est sectionné au premier contact du papier sur les arêtes extérieures avec la lame de coupe à liège.

7. Procédé selon la revendication 6, dans lequel la dite surface de coupe (18) présente l'allure prédéterminée requise lorsque la température de service se trouve dans un domaine prédéterminé.

8. Procédé selon la revendication 7, dans lequel le dit domaine prédéterminé de la température de service est supérieur à la température ambiante.

9. Machine à embouts de cigarettes, comprenant un tambour à liège, des moyens pour chauffer le dit tambour à liège à une température de service supérieure à la température ambiante, et une surface de coupe (18) sur le dit tambour à liège, caractérisé en ce que la dite surface de coupe située sur le tambour à liège a été usinée à une allure requise en relation avec l'allure d'une lame de coupe dont une arête est disposée de façon à rencontrer en service la dite surface de coupe et à collaborer avec elle pour sectionner un papier-liège à embout entre la dite lame et le tambour, de dernier ayant été chauffé et maintenu à la dite température de service.

10. Appareil selon la revendication 9, dans lequel une partie de la dite surface usinée (18) du tambour à liège (16) est agencée de façon à définir une ligne droite.

11. Appareil selon la revendication 9 ou la revendication 10, dans lequel une aréete de la lame de coupe (20) est usinée selon une allure légèrement concave.

12. Appareil selon la revendication 9, la revendication 10 ou la revendication 11, dans lequel la dite surface de coupe (18) est constituée par un élément rapporté, durci et engagé dans le tambour à liège (16).

**Patentansprüche**

1. Verfahren zur Vorbereitung der Schnittfläche (18) einer Trommel (16) einer Zigarettenmundstückmaschine, mit einem Messer (20), das eine Schneidekante aufweist, die im Gebrauch mit der genannten Schnittfläche zusammenarbeitet um Korkmundstückpapier zu schneiden, wobei die genannte Trommel auf eine gewünschte Betriestemperatur oberhalb der Raumtemperatur erwärmt wird, gekennzeichnet durch den Verfahrensschritt des Erwärmens der genannten Trommel (16) auf Betriebstemperatur und Bearbeiten der Schnittfläche (18) der genannten Trommel, dass die Schnittfläche eine vorgewählte Form aufweist, die der Form des Messers (20) bei der genannten Betriebstemperatur entspricht.

2. Verfahren nach Anspruch 1, gekennzeichnet durch Bearbeiten der Schnittfläche (18) der genannten Korktrommel (16) längs einer geraden Linie in der Ebene der Achse der genannten Trommel.

3. Verfahren nach Anspruch 2, gekennzeichnet durch den weiteren Schritt der geraden Bearbeitung einer Kante des genannten Korkmessers (20).

4. Verfahren nach Anspruch 2, gekennzeichnet durch den weiteren Schritt des Bearbeitens einer konkaven Kante an dem genannten Korkmesser (20).

5. Verfahren nach Anspruch 1, gekennzeichnet durch den Schritt der Bearbeitung der genannten Oberfläche (18) der genannten Korktrommel (16) in die konkave Form under der genannten Kante des genannten Korkmessers (20) in die gerade Form.

6. Verfahren nach Anspruch 1, dadurch gekennzeichnet, dass die Korktrommel (16) und das Korkmesser (20) zu solchen Formen bearbeitet werden, so dass über die genannte erwärmte Korktrommel geführtes Korkmundstückpapier bei der ersten Berührung des genannten Papiers an den Aussenkanten mit dem genannten Korkschneidemesser geschnitten wird.

7. Verfahren nach Anspruch 6, dadurch gekennzeichnet, dass die Schnittfläche (18) die gewünschte, vorgewählte Form aufweist, wenn ihre Betriebstemperatur innerhalb einem gewünschten, vorgewählten Bereich liegt.

8. Verfahren nach Anspruch 7, dadurch gekennzeichnet, dass der genannte vorgewählte Bereich höher ist als die Raumtemperatur.

9. Zigarettenmundstückmaschine mit einer Korktrommel (16), Mittel (52) zum Erwärmen der genannten Korktrommel auf eine Betriebstemperatur oberhalb der Raumtemperatur und einer Schnittfläche (18) an der genannten Korktrommel, dadurch gekennzeichnet, dass die genannte Schnittfläche an der genannten Korktrommel so bearbeitet wurde, dass es eine gewünschte Form bezogen auf die Form eines Schneidemessers aufweist, das eine Schneidkante besitzt, die so angeordnet ist, dass sie im Gebrauch in einer Zusammenarbeitsbeziehung mit der genannten Schnittfläche ist, um Korkmundstückpapier dazwischen zu schneiden, während die Korktrommel auf die genannte Betriebstemperatur erwärmt und gehalten wurde.

10. Maschine nach Anspruch 9, dadurch gekennzeichnet, dass ein Teil der bearbeiteten Oberfläche (18) der genannten Korktrommel (16) so gemacht ist, dass er eine gerade Linie definiert.

11. Maschine nach Anspruch 9 oder 10, dadurch gekennzeichnet, dass eine Kante des genannten Schneidmessers (20) so bearbeitet ist, dass sie eine leicht konkave Form aufweist.

12. Maschine nach Anspruch 9, 10 oder 11, dadurch gekennzeichnet, dass die genannte Schnittfläche (18) aus einem gehärteten Einsatz in der Korktrommel (16) gebildet ist.

Fig. 1

Fig. 2

1

0 020 380

Fig. 4

Fig. 5

Fig. 3

2